Europäisches Patentamt

European Patent Office

Office européen des brevets

(11) Veröffentlichungsnummer: **0 517 280 A2**

(12) **EUROPÄISCHE PATENTANMELDUNG**

(21) Anmeldenummer: **92109685.5**

(22) Anmeldetag: **09.06.92**

(51) Int. Cl.⁵: **F16J 15/48**

(30) Priorität: **07.06.91 DE 4118845**
**27.05.92 DE 4217609**

(43) Veröffentlichungstag der Anmeldung:
**09.12.92 Patentblatt 92/50**

(84) Benannte Vertragsstaaten:
**AT BE CH DE DK ES FR GB GR IT LI LU MC NL PT SE**

(71) Anmelder: **Sihi GmbH & Co KG**
**Lindenstrasse 170**
**W-2210 Itzehoe(DE)**

(72) Erfinder: **Lehmann, Wilfried, Dr.-Ing.**
**Steckfortkamp 10**
**W-2210 Heiligenstedten(DE)**
Erfinder: **Fandrey, Peter, Dipl.-Ing.**
**Nordmarkstrasse 49**
**W-2208 Glückstadt(DE)**

(74) Vertreter: **Glawe, Delfs, Moll & Partner**
**Patentanwälte**
**Postfach 26 01 62 Liebherrstrasse 20**
**W-8000 München 26(DE)**

(54) Wellendurchführung.

㊄ Wellendurchführung durch ein Aggregatgehäuse, mit einer Abdichtung (6), einer Drosselbuchse (7) und einem dazwischen angeordneten Zwischenraum (9). Im Falle des Versagens der Abdichtung (6) begrenzt die Drosselbuchse (7) den Austritt von Medium. Wenn sehr hohe Sicherheitsanforderungen bezüglich der Dichtigkeit der Wellendurchführung im Falle des Versagens der Abdichtung (6) erfüllt werden müssen, ist zusätzlich eine Sekundärabdichtung in Form eines Dichtrings (13) vorgesehen, der über einen Kanal (12) mit dem Druck im Zwischenraum (9) beaufschlagt wird. Bei ansteigendem Druck im Zwischenraum (9) infolge des Versagens der Abdichtung (6) wird dieser Dichtring (13) axial verschoben, bis er dichtend anliegt. Der Zwischenraum (9) kann Sensoren zur Überwachung der Dichtigkeit der Abdichtung (6) aufweisen.

EP 0 517 280 A2

Die Erfindung betrifft eine Wellendurchführung durch ein Aggregatgehäuse mit einer Abdichtung und einer der Dichtung als zusätzliches Strömungshindernis vorgeschalteten Drossel.

Bei der Förderung gefährlicher oder umweltbelastender Medien werden heute zunehmend höhere Anforderungen an die Dichtigkeit der fördernden Pumpen und Anlagen gestellt, so daß häufig sehr teure und kostspielige Ausführungen von Wellendurchführungen oder aber eine hermetische Kapselung mittels Magnetkupplungsantrieb oder Spaltrohrmotorantrieb erforderlich sind. Häufig wird z.B. eine doppelte Gleitringdichtung verwendet. Hierbei ist allerdings eine Überwachung des Raumes zwischen den Gleitringdichtungen sowie seine Versorgung entweder mit Sperr- oder Spülflüssigkeit erforderlich. Überwachungs- und Sperr- bzw. Spülflüssigkeitsvorrichtungen erreichen dabei nicht selten einen Preis, der über dem Preis für die gesamte übrige Pumpe liegt.

Der Erfindung liegt die Aufgabe zugrunde, eine Wellendurchführung der eingangs genannten Art zu schaffen, bei der eine kostengünstigere und weniger aufwendige Abdichtung verwendet werden kann und bei der dennoch hohe Sicherheitsanforderungen bezüglich der Dichtigkeit erfüllt werden.

Die Erfindung löst diese Aufgabe dadurch, daß die Drossel einen engen Drosselspalt mit weniger als 0,2 mm Spiel aufweist und daß die gegeneinanderlaufenden Partner der Drossel aus trockenlaufsicheren Werkstoffen hergestellt sind und daß an dem geschlossenen Zwischenraum zwischen der Abdichtung und der Drossel ein Kontrollanschluß vorgesehen ist. Auf diese Weise wird ein sicherer und verschleißarmer Betrieb gewährleistet und selbst bei defekter Abdichtung der Wellendurchführung tritt Medium nur in sehr eng begrenztem Umfang aus. Über den Kontrollanschluß kann eine eventuell auftretende Leckage infolge Defektes der Abdichtung der Wellendurchführung kontrolliert abgeführt werden.

Besonders vorteilhaft ist es, wenn der Drosselspalt ein Spiel von weniger als 0,15 mm aufweist.

Bei einer vorteilhaften Ausführungsform der Erfindung wird die Drossel als Drosselstrecke von einer die Welle umschließenden Drosselbuchse gebildet, die beispielsweise in den Aggregatgehäusedeckel eingesetzt sein kann. Vorteilhafterweise besteht diese Drosselbuchse aus Kohle, Bronze, oder aus Metall mit einer Beschichtung aus diamantartigem Kohlenstoff. Die Verwendung eines dieser Werkstoffe als Gegenlaufpartner zum Metall oder zu irgendeiner anderen üblichen Oberflächenbeschichtung der Welle erlaubt es, das enge Spiel zu verwirklichen, gewährleistet darüber hinaus eine optimale Wärmeabfuhr und ist auch wegen der guten Trockenlaufeigenschaften in der Handhabung relativ problemlos.

Eine weitere Verbesserung der Laufeigenschaften der Drosselbuchse läßt sich dadurch erreichen, daß die Umfangsfläche der Welle im Bereich der Drosselstrecke veredelt ist.

Eine andere erfindungsgemäße Lösung der Aufgabe besteht darin, daß die Wellendurchführung als zusätzliche Abdichtung mindestens einen Lippenring aufweist.

Bei beiden erfindungsgemäßen Lösungen ist es sinnvoll, daß zwischen der Abdichtung und der Drosselstrecke bzw. den Lippenringen ein Zwischenraum angeordnet ist.

Wenn ein Sensor oder mehrere Sensoren zur Überwachung des Zwischenraums vorgesehen sind, kann eine aus der Abdichtung austretende Leckage sofort festgestellt werden und es kann durch optische oder akustische Signale darauf aufmerksam gemacht werden. Zusätzlich können diese Sensoren auch einen Abschalter zur Stillegung des die Wellendurchführung aufweisenden Aggregates betätigen. Ist dieses Aggregat eine Pumpe, so können gleichzeitig mit dem Abschalten dieser Pumpe die Saug- und Druckleitungen von und zur Pumpe durch entsprechende Absperrmittel dichtgesetzt werden, um möglichst kein Medium durch den Drosselspalt bzw. durch die Lippendichtringe nach außen treten zu lassen.

Bei der Anordnung von Lippenringen als zusätzliche Abdichtung der Wellendurchführung ist es sinnvoll, zumindest den zur Seite der Abdichtung hin liegenden Lippenring so anzuordnen, daß er bei einer Leckage dieser Abdichtung durch den sich dann aufbauenden Druck im Zwischenraum zwischen Abdichtung und Lippenringen an die Welle anlegt. Die Zwischenräume der Lippenringe können mit Fett gefüllt sein. Das Fett soll die Trockenlaufeigenschaften der Lippenringe verbessern, zum anderen aber auch noch als zusätzliches Dichtmittel wirken.

Bei sehr hohen Sicherheitsanforderungen für den Fall des Versagens der Abdichtung einer Wellendurchführung ist es möglich, daß die bisher genannten Maßnahmen nicht ausreichen. Ist beispielsweise eine Wellendurchführung einer Flüssiggaspumpe zusätzlich zu der normalen Abdichtung mit der erfindungsgemäßen Drosselstrecke versehen, so wird beim Versagen der Abdichtung trotzdem eine große Gasmenge freigesetzt werden, da aufgrund des Phasenübergangs des Flüssiggases in die Gasphase eine starke Volumenvergrößerung eintritt. Bei einer vorteilhaften Ausführungsform der Erfindung ist daher zusätzlich eine Sekundärabdichtung vorgesehen, die von einer nicht dichtenden Bereitschaftsposition in eine Dichtposition verschiebbar ist, um einerseits während des normalen Betriebs keinem Verschleiß ausgesetzt zu sein und andererseits bei Ausfall der Abdichtung zur zusätzlichen Abdichtung zur Verfügung zu stehen. Da die Sekundärabdichtung nur für kurzzeitigen Betrieb im Notfall bestimmt ist, kann sie unaufwendig ausgeführt sein. Sie bewirkt, daß der durch die Drosselstrecke bzw. die Lippendichtringe hindurchtretende Leckagestrom nicht sofort in die Umgebung gelangt, sondern während einer Zeitperiode zurückgehalten wird, die dazu ausreicht, das Aggregat bei Ausfall der Abdichtung herunterzufahren und zur Reparatur vorzubereiten, ohne daß dabei unzulässig hohe Mengen Medium in die Umgebung austreten. Eine solche Sekundärabdichtung kann bei allen Wellendurchführungen mit einer Abdichtung die Sicherheit bei Betriebstörungen erhöhen, unabhängig davon, ob die Wellendurchführung gemäß einem der Ansprüche 1 bis 8 ausgeführt ist.

Für die Verschiebung der Sekundärdichtung aus der Bereitschaftsposition in die Dichtposition sind zweckmäßigerweise Einrichtungen zum Beaufschlagen der Sekundärabdichtung mit dem im Zwischenraum herrschenden Druck vorgesehen.

Vorteilhafterweise ist die Sekundärabdichtung als in einer die Welle umschließenden Nut angeordneter Dichtring ausgebildet, wobei der Nutgrund durch mindestens einen Kanal mit dem Zwischenraum verbunden ist und wobei durch ansteigenden Druck im Zwischenraum der Dichtring aus der nicht dichtenden Bereitschaftsposition in die Dichtposition verschiebbar ist.

Wenn anderenfalls die Gefahr besteht, daß das Leckmedium zwischen dem Dichtungsgehäuse und einer sich daran anschließenden, weiteren Gehäusewand entweicht, die beispielsweise zu einem Lagergehäuse gehört, ist es zweckmäßig, daß die Nut an der Stirnseite des Wellenabdichtungsgehäuses benachbart der inneren Stirnwand des weiteren Gehäuses angeordnet ist und daß der Dichtring aus der nicht dichtenden Bereitschaftsposition axial in die Dichtposition verschiebbar ist, in der er das Wellenabdichtungsgehäuse statisch gegen die innere Stirnwand des weiteren Gehäuses abdichtet. Diese Ausführungsform ist kostengünstig und mit geringem konstruktiven Aufwand zu verwirklichen.

Zwei Ausführungsbeispiele der Erfindung werden im folgenden anhand der Zeichnung näher beschrieben. Darin zeigen:

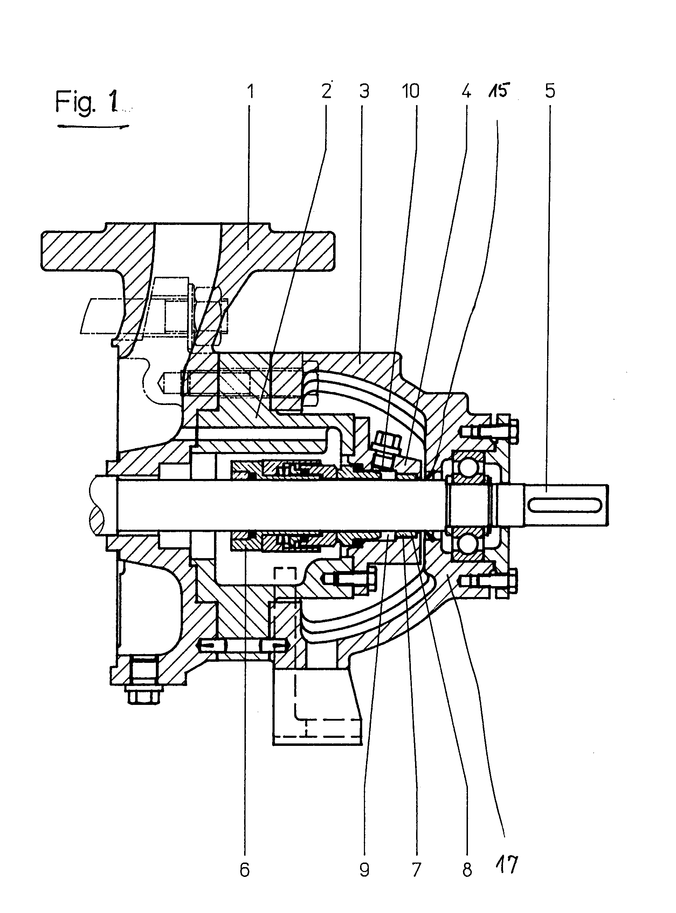

Fig. 1    einen Längsschnitt durch eine erste Ausführungsform und

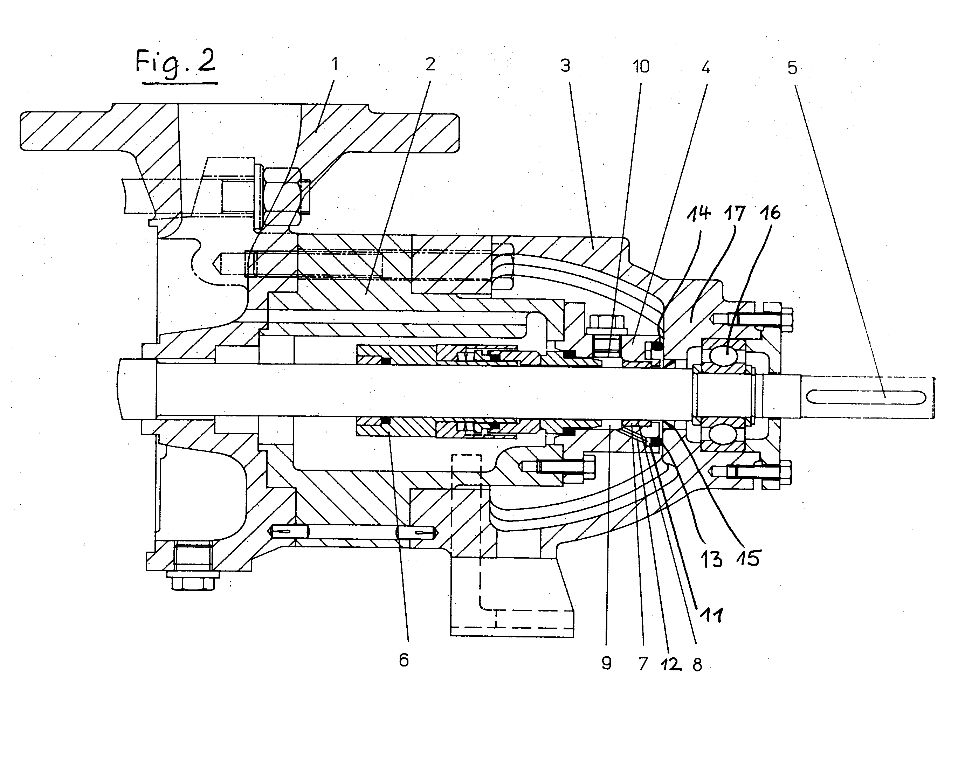

Fig. 2    einen Längsschnitt durch eine zweite Ausführungsform.

In beiden Fällen sind an das Pumpengehäuse 1 das Wellenabdichtungsgehäuse 2 als Aggregatgehäuse und der Kugellagerbügel 3 mit dem Lagergehäuse 17 als weiteres Gehäuse angeflanscht. Die Welle 5 ist mittels des Kugellagers 16 in dem Lagergehäuse 17 gelagert. Als Abdichtung der Welle 5 ist eine axial wirkende mechanische Gleitringdichtung 6 vorgesehen. Auf deren Niederdruckseite ist als zusätzliches Strömungshindernis eine Drosselbuchse 8 vorgeschaltet, die sich zwischen der inneren Umfangsfläche der Drosselbuchse 7 und der äußeren Umfangsfläche der Welle 5 befindet. Zwischen der Gleitringdichtung 6 und der Drosselbuchse 7 ist ein Zwischenraum 9 angeordnet, der einen Kontrollanschluß 10 zur Beaufschlagung eines hier nicht dargestellten Sensors mit dem im Zwischenraum 9 herrschenden Druck aufweist. Über den Kontrollanschluß 10 kann auch die Leckage gezielt und kontrolliert abgeführt werden. In dem Lagergehäuse 17 ist eine Lippendichtung 15 vorgesehen, die im Normalbetrieb lediglich dem Schutz des Lagers dient, aber im Leckagefall dem Leckmedium den Durchgang durch das Lagergehäuse versperrt.

In der zweiten Ausführung ist vorausgesetzt, daß der Lagerbügel 3 offen ist. An der Stirnseite des Wellenabdichtungsgehäusedeckels 4 ist eine Nut 11 angeordnet, deren Nutgrund über den Kanal 12 mit dem Zwischenraum 9 verbunden ist. In der Nut 11 ist ein O-Ring als Sekundärdichtung 13 angeordnet, der in der nicht dichtenden Bereitschaftsposition in der Tiefe der Nut liegt und die innere Stirnwand 14 des Lagergehäuses 17 nicht berühren muß.

Wenn im Betrieb der Pumpe die axial wirkende mechanische Gleitringdichtung 6 versagt, dringt gefördertes Medium in den Zwischenraum 9 ein und läßt dort den Druck ansteigen. Über den Kanal 12 wird dann die dem Nutgrund zugewandte Seite des O-Rings 13 mit diesem Druck beaufschlagt, so daß der O-Ring 13 axial in Richtung der inneren Stirnwand 14 des Lagergehäuses 17 verschoben wird, bis er dichtend an dieser inneren Stirnwand 14 anliegt. Diese Position des O-Rings 13 ist in der Zeichnung dargestellt. Durch die Drosselstrecke 8 der Drosselbuchse 7 durchtretendes Medium kann dann nicht mehr radial nach außen entweichen. Die Lippendichtung 15 verhindert ein axiales Entweichen in Richtung des Kugellagers 16. Die Dichtung 15 kann von jeder beliebigen Bauart solcher Dichtungen gebildet sein, die durch den abzudichtenden Druck nur umso fester an die Gegendichtfläche gepreßt werden. Der Ausdruck Lippendichtung ist in diesem Sinn weit auszulegen und umfaßt insbesondere solche Dichtungen, wie sie für die Kapselung von Kugellagern vorgesehen werden. Ein an den Kontrollanschluß 10 angeschlossener Sensor kann einen durch Versagen der Gleitdichtung 6 verursachten Druckanstieg im Zwischenraum 9 registrieren und daraufhin das Abschalten der Pumpe veranlassen.

Der Dichtring 13 kann von einfacher Ausführung sein, da er nur statisch beansprucht wird.

Andere Ausführungsformen der Sekundärabdichtung sind ebenfalls denkbar. So kann es vorgesehen sein, daß der O-Ring 13 radial gegen die Welle gedrückt wird. Da im Falle eines Versagens der Abdichtung das entsprechende Aggregat sofort stillgelegt wird, muß der radial gegen die Welle gedrückte Dichtring nur während einer verhältnismäßig kurzen Zeit dynamisch abdichten, anschließend muß er gegen die stehende Welle lediglich statisch abdichten, bis das Aggregat zur Reparatur vorbereitet ist. Aus diesem Grunde müssen bei dieser Ausführungsform an die Verschleißfestigkeit des Dichtrings keine hohen Anforderungen gestellt werden.

**Patentansprüche**

1. Wellendurchführung durch ein Aggregatgehäuse mit einer Abdichtung (6) und einer der Dichtung als zusätzliches Strömungshindernis vorgeschalteten Drossel (8), dadurch gekennzeichnet, daß die Drossel (8) einen engen Drosselspalt mit weniger als 0,2 mm Spiel aufweist, daß die die Drossel (8) zwischen sich bildenden Teile aus trockenlaufsicheren Werkstoffen hergestellt sind, und daß an dem geschlossenen Zwischenraum (9) zwischen der Abdichtung (6) und der Drossel (8) ein Kontrollanschluß (10) vorgesehen ist

2. Wellendurchführung nach Anspruch 1, dadurch gekennzeichnet, daß die Drossel (8) als Drosselstrecke von einer die Welle (5) umschließenden Drosselbuchse (7) gebildet wird.

3. Wellendurchführung nach Anspruch 2, dadurch gekennzeichnet, daß die Drosselbuchse (7) aus Kohle besteht.

4. Wellendurchführung nach Anspruch 2, dadurch gekennzeichnet, daß die Drosselbuchse (7) aus Bronze besteht.

5. Wellendurchführung nach Anspruch 2, dadurch gekennzeichnet, daß die Drosselbuchse (7) aus Metall mit einer Beschichtung aus diamantartigem Kohlenstoff besteht.

6. Wellendurchführung nach einem der Ansprüche 1 bis 5, dadurch gekennzeichnet, daß die Umfangsfläche der Welle (5) im Bereich der Drossel (8) veredelt ist.

7. Wellendurchführung durch ein Aggregatgehäuse mit einer Abdichtung (6) insbesondere nach einem der Ansprüche 1 bis 6, dadurch gekennzeichnet, daß der Dichtung mindestens ein Lippenring (15) als zusätzliche Abdichtung auf der Niederdruckseite vorgeschaltet ist.

8. Wellendurchführung nach einem der Ansprüche 1 bis 7, dadurch gekennzeichnet, daß ein Sensor zur Überwachung des Drucks im Zwischenraum (9) vorgesehen ist.

9. Wellendurchführung mit einer Abdichtung, insbesondere nach einem der Ansprüche 1 bis 8, dadurch gekennzeichnet, daß zusätzlich eine Sekundärabdichtung (13) vorgesehen ist, die mittels des im Zwischenraum (9) herrschenden Drucks von einer nicht dichtenden Bereitschaftsposition in eine Dichtposition verschiebbar ist.

10. Wellendurchführung nach Anspruch 9, dadurch gekennzeichnet, daß die Sekundärabdichtung als in einer die Welle (5) umschließenden Nut (11) angeordneter Dichtring (13) ausgebildet ist, wobei der Nutgrund durch mindestens einen Kanal (12) mit dem Zwischenraum (9) verbunden ist und durch ansteigenden Druck im Zwischenraum (9) der Dichtring (13) aus der nicht dichtenden Bereitschaftsposition in die Dichtposition verschiebbar ist.

11. Wellendurchführung nach Anspruch 10, dadurch gekennzeichnet, daß die Nut (11) an der Stirnseite eines Wellenabdichtungsgehäuses (4) benachbart der inneren Stirnwand (14) eines weiteren Gehäuses angeordnet ist und daß der Dichtring (13) aus der nicht dichtenden Bereitschaftposition axial in die Dichtposition verschiebbar ist, in der er das Wellenabdichtungsgehäuse (4) statisch gegen die innere Stirnwand (14) des Aggregatgehäuses abdichtet.

## Fig. 1

Fig. 2

EP 0 517 280 A2